# EUROPÄISCHE PATENTANMELDUNG

(11) **EP 2 455 792 A1**
(43) Veröffentlichungstag der Anmeldung: **23.05.2012**
(21) Anmeldenummer: 10191847.2
(22) Anmeldetag: 19.11.2010
(51) Int. Cl.: G02B 6/42, G06F 13/38, G05B 19/418

(54) **Netzwerkkomponente mit Transceivermodulen**

(71) Anmelder: SIEMENS AKTIENGESELLSCHAFT, 80333 München (DE)
(72) Erfinder: Kistner, Timo, 76456, Kuppenheim (DE); Hack, Heiko, 91301, Forchheim (Kersbach) (DE); Schäffler, Andreas, 76131, Karlsruhe (DE)

(57) **Zusammenfassung**

Die Erfindung betrifft eine Netzwerkkomponente (300) für ein Automatisierungssystem, wobei die Netzwerkkomponente zumindest ein Adaptermodul (100), mehrere Transceivermodule (104) und eine Steuereinheit (302) umfasst, wobei die Transceivermodule über eine Steckverbindung (102) mit dem zumindest einen Adaptermodul verbunden sind, wobei die Transceivermodule dazu ausgebildet sind, erste optische Signale von der Steuereinheit über das zumindest eine Adaptermodul zu empfangen und die ersten optischen Signale über das Automatisierungssystem an zumindest eine weitere Netzwerkkomponente des Automatisierungssystems auszugeben, und wobei die Transceivermodule ferner dazu ausgebildet sind, zweite optische Signale von dem Automatisierungssystem zu empfangen und die zweiten optischen Signale über das zumindest eine Adaptermodul an die Steuereinheit auszugeben.

## Beschreibung

Die Erfindung betrifft eine Netzwerkkomponente für ein Automatisierungssystem, insbesondere eine Netzwerkkomponente mit optischen Transceivern.

Optische Transceiver von Netzwerkkomponenten in Automatisierungssystemen sind mit unterschiedlichen Reichweiten für optische Übertragungen verfügbar. Übliche Reichweiten sind zum Beispiel 750 m, 10 km, 40 km, 80 km oder 120 km. Die Anzahl der Ports mit der jeweiligen Transceivervariante ist festgelegt.

Demgegenüber liegt der Erfindung die Aufgabe zugrunde, eine verbesserte Netzwerkkomponente, ein verbessertes Adaptermodul, ein verbessertes Transceivermodul, ein verbessertes System daraus und ein verbessertes Verfahren zum Wechsel eines Transceivers in einer Netzwerkkomponente zu schaffen.

Diese Aufgabe wird durch die Netzwerkkomponente, das Adaptermodul, das Transceivermodul, das System und das Verfahren nach den unabhängigen Ansprüchen gelöst. Ausführungsformen der Erfindung sind in den abhängigen Ansprüchen gegeben.

Die Erfindung betrifft eine Netzwerkkomponente für ein Automatisierungssystem. Die Netzwerkkomponente umfasst zumindest ein Adaptermodul, mehrere Transceivermodule und eine Steuereinheit. Die Transceivermodule sind über eine Steckverbindung mit dem zumindest einen Adaptermodul verbunden. Die Transceivermodule sind dazu ausgebildet, erste optische Signale von der Steuereinheit über das zumindest eine Adaptermodul zu empfangen und die ersten optischen Signale über das Automatisierungssystem an zumindest eine weitere Netzwerkkomponente des Automatisierungssystems auszugeben. Die Transceivermodule sind ferner dazu ausgebildet, zweie optische Signale von dem Automatisierungssystem zu empfangen und die zweiten optischen Signale über das zumindest eine Adaptermodul an die Steuereinheit auszugeben.

Ein Automatisierungssystem kann z.B. als industrielles Automatisierungssystem ausgebildet sein. Solche industriellen Automatisierungssysteme können z.B. zur Steuerung und/oder Regelung von industriellen Anlagen (z.B. Produktionsanlagen, Förderanlagen usw.), Maschinen und/oder Geräten ausgebildet, eingerichtet und/oder vorgesehen sein. Insbesondere können Automatisierungssysteme bzw. industrielle Automatisierungssysteme Echzeit-Kommunikationsprotokolle (z.B. Profinet, Profibus, Real-Time-Ethernet) zur Kommunikation zumindest zwischen den an den Steuerungs- und/oder Regelungsaufgaben beteiligten Komponenten (z.B. zwischen den Steuerungseinheiten und den zu steuernden Anlagen und/oder Maschinen) aufweisen. Weiterhin kann neben einem Echtzeit-Kommunikationsprotokoll aber auch noch mindestens ein weiteres Kommunikationsprotokoll (das z.B. nicht echtzeitfähig zu sein braucht) in dem Automatisierungssystem bzw. industriellen Automatisierungssystem vorgesehen sein, z.B. zum Überwachen, Einrichten, Umprogrammieren oder/oder Umparametrieren einer oder mehrerer Steuerungseinheiten im Automatisierungssystem.

Ein Automatisierungssystem kann z.B. drahtgebundene Kommunikation und/oder drahtlose Kommunikation umfassen.

Eine Netzwerkkomponente kann beispielsweise ein Computer, PC und/oder Controller mit Steuerungs-Aufgaben bzw. Steuerungs-Fähigkeiten sein. Insbesondere kann eine Netzwerkkomponente beispielsweise eine industrielle Netzwerkkomponente sein, die z.B. speziell zur Steuerung und/oder Regelung industrieller Anlagen ausgebildet, eingerichtet und/oder vorgesehen sein kann. Insbesondere können solche Netzwerkkomponenten bzw. industriellen Netzwerkkomponenten echtzeitfähig sein, d.h. eine Steuerung bzw. Regelung in Echtzeit ermöglichen. Dazu kann die Netzwerkkomponente bzw. die industrielle Netzwerkkomponente z.B. ein Echtzeitbetriebssystem umfassen und/oder zumindest unter anderem ein echtzeitfähiges Kommunikationsprotokoll zur Kommunikation (z.B. Profinet, Profibus, Real-Time-Ethernet) unterstützen.

Eine Netzwerkkomponente kann auch ein Schalt-Netzknoten, Switch oder Hub sein. Eine solche Netzwerkkomponente weist mehrere Netzwerkanschlüsse auf und leitet Daten im Automatisierungssystem weiter. Eine solche Netzwerkkomponente kann also Daten von einer anderen Komponente des Automatisierungssystems empfangen und an eine weitere Komponente des Automatisierungssystems ausgeben.

Eine Netzwerkkomponente kann auch z.B. eine speicherprogrammierbare Steuerung, ein Modul oder Teil einer speicherprogrammierbaren Steuerung, eine in einem Computer oder PC integrierte speicherprogrammierbare Steuerung sowie entsprechende Feldgeräte, Sensoren und/oder Aktoren, Ein- und/oder Ausgabegeräte oder Ähnliches zum Anschluss an einer speicherprogrammierbare Steuerung sein oder solche umfassen.

Als Automatisierungsprotokoll im Sinne der vorliegenden Erfindung wird jede Art von Protokoll verstanden, das zur Kommunikation mit Automatisierungs-Einrichtungen gemäß der vorliegenden Beschreibung vorgesehen, geeignet und/oder eingerichtet ist. Solche Automatisierungsprotokolle können beispielsweise das Profi-Bus-Protokoll (z. B. gemäß IEC 61158/EN50170), ein Profi-Bus-DP-Protokoll, ein Profi-Bus-PA-Protokoll, ein Profi-Net-Protokoll, ein Profi-Net-IO-Protokoll, ein Protokoll gemäß AS-Interface, ein Protokoll gemäß IO-Link, ein KNX-Protokoll, ein Protokoll gemäß einer Mehrpunkt-Schnittstelle (Multipoint-Interface, MPI), ein Protokoll für eine Punkt-zu-Punkt-Kopplung (Point-to-Point, PtP), ein Protokoll gemäß den Spezifikationen der S7-Kommunikation (welches beispielsweise zur Kommunikation von speicherprogrammierbaren Steuerungen der Firma Siemens vorgesehen und eingerichtet ist) oder auch ein Industrial-Ethernet-Protokoll oder Real-Time-Ethernt-Protokoll bzw. weitere spezifische Protokolle für die Kommunikation mit Automatisierungsgeräten sein. Als Automatisierungsprotokoll im Sinne der vorliegenden Beschreibung können auch beliebige Kombinationen der vorgenannten Protokolle vorgesehen sein.

Eine Netzwerkkomponente kann beispielsweise als so genannter "Switch", als eine so genannte "Bridge", als so genannter "Hub", als so genannter "Router" oder eine ähnliche Netzwerkkomponente zur Weiterleitung und Verteilung von Daten innerhalb eines Automatisierungssystems oder zwischen Automatisierungssystemen oder Automatisierungs-Teilnetzen ausgebildet und eingerichtet sein.

Die Ausstattung der Netzwerkkomponente mit Transceiver- und Adaptermodulen ist vorteilhaft, da so flexibel auf Anforderungen an die Netzwerkkomponente reagiert werden kann. Beispielsweise können günstige Transceivermodulen mit geringen Reichweiten eingesetzt werden, wenn diese Reichweiten für die Netzwerkkomponente ausreichend sind. Falls eine höhere Reichweite der optischen Signale notwendig ist, können die Transceivermodule einfach durch andere Transceivermodule ersetzt werden, die die geforderte Reichweite erreichen. Die Flexibilität der Netzwerkkomponente wird also signifikant dadurch erhöht, dass Transceivermodule beliebig austauschbar sind.

Dies ist beispielsweise auch vorteilhaft, da beispielsweise eine günstige Version der Netzwerkkomponente mit günstigen Transceivermodulen angeboten werden kann und diese günstige Version der Netzwerkkomponente im Nachhinein noch durch höherwertige Transceivermodule aufgewertet werden kann. Beim Zusammenschalten mehrerer Netzwerkkomponenten mit solchen optischen Transceivern muss außerdem darauf geachtet werden, dass die Transceiver der zusammengeschaltete Netzwerkkomponenten die gleichen Reichweiten für optische Signale aufweisen. Dies ist unabhängig von der tatsächlichen Übertragungsstrecke der optischen Signale. Bei einer Übertragungsstrecke von beispielsweise 5 km sind Transceiver mit einer Reichweite von 10 km ausreichend. Sollte jedoch der Transceiver einer ersten Netzwerkkomponente über eine Reichweite von 40 km verfügen, so muss auch der zweite Transceiver über eine Reichweite von 40 km verfügen. Durch die hohe Flexibilität von Ausführungsformen der Erfindung wird nun erreicht, dass eine Netzwerkkomponente in einfacher und günstiger Weise auf eine andere Netzwerkkomponente hinsichtlich der Reichweite des Transceivers abgestimmt werden kann. Sollte beispielsweise eine erste Komponente einen Transceiver mit einer Reichweite von 40 km und eine zweite Netzwerkkomponente einen Transceiver mit einer Reichweite von 20 km haben, so muss lediglich das Transceivermodul an einer der beiden Netzwerkkomponenten ausgetauscht werden, damit die beiden Netzwerkkomponenten miteinander verbunden werden können.

Nach Ausführungsformen der Erfindung ist das zumindest eine Adaptermodul dazu ausgebildet, Kennungen der Transceivermodule auszulesen. Jedem Transceivermodul ist dabei genau eine Kennung zugeordnet. Die Kennungen sind dazu ausgebildet, für die Ausgabe der ersten optischen Signale an die weitere Netzwerkkomponente und für den Empfang der zweiten optischen Signale von dem Automatisierungssystem verwendet zu werden. Mit anderen Worten wird die Kennung als benötigt, um Daten von der Netzwerkkomponente zu der weiteren Netzwerkkomponente oder an andere Komponenten im Automatisierungssystem zu übertragen und von einer weiteren Netzwerkkomponente Daten zu empfangen.

Falls ein Transceivermodul ausgetauscht wird, wird die Kennung des neu eingesetzten Transceivermoduls vom Adaptermodul ausgelesen und an die Steuereinheit der Netzwerkkomponente ausgegeben. So werden Informationen über die Kennungen der Transceivermodule in den einzelnen Netzwerkkomponenten des Automatisierungssystems gespeichert. Das Auslesen der Kennungen kann beispielsweise durch einen Prozessor des Adaptermoduls, der Programminstruktionen ausführt, geschehen.

Nach Ausführungsformen der Erfindung ist das zumindest eine Adaptermodul dazu ausgebildet, die ausgelesene Kennung der Transceivermodule an die Steuereinheit und/oder an die zumindest eine weitere Netzwerkkomponente des Automatisierungssystems auszugeben. Durch die Übermittlung der Kennung an die Steuereinheit und/oder an die zumindest eine weitere Netzwerkkomponente wird sichergestellt, dass die Steuereinheit und/oder die zumindest eine weitere Netzwerkkomponente Informationen über die Kennung der verwendeten Transceivermodule hat, damit eine sichere Datenübertragung zwischen der Netzwerkkomponente und der zumindest einen weiteren Netzwerkkomponente sichergestellt ist.

Nach Ausführungsformen der Erfindung sind die Transceivermodule und das zumindest eine Adaptermodul für eine fixierbare Steckverbindung ausgebildet. Zur Fixierung der Transceivermodule ist entweder eine Vorrischtung vorzusehen, die vom Anwender ausschließlich mit einem Werkzeug fixiert und gelöst werden kann. Der Anwender ist in diesem Fall in der Lage, die Zusammenstellung der Transceivermodule mit dem zughörigen Adaptermodul direkt vor Ort durchzuführen. Alternativ dazu kann eine Mechanik für die Steckverbindung eingesetzt werden, die es erlaubt, die Transceivermodule hot-plug-fähig zu implementieren und während des laufenden Betriebs die Steckverbindung zu lösen und zu schließen.

Nach Ausführungsformen der Erfindung sind die Transceivermodule und das zumindest eine Adaptermodul für eine Steckverbindung ausgebildet, die während des Betriebs der Netzwerkkomponente gelöst und/oder geschlossen werden kann. Dies kann als so genannte Hot Plug-Fähigkeit bezeichnet werden.

In einem weiteren Aspekt betrifft die Erfindung ein Adaptermodul für eine Netzwerkkomponente in einem Automatisierungssystem. Das Adaptermodul ist zur Ausbildung einer Steckverbindung mit zumindest einem Transceivermodul der Netzwerkkomponente ausgebildet. Die Steckverbindung kann entweder eine sogenannte Hot Plug-Verbindung sein oder aber auch eine fixierbare Steckverbindung. Das Adaptermodul ist außerdem dazu ausgebildet, erste optische Signale von der Netzwerkkomponente zu empfangen und die ersten optischen Signale an das zumindest eine Transceivermodul auszugeben. Ferner ist das Adaptermodul dazu ausgebildet, zweite optische Signale von dem zumindest einem Transceivermodul zu empfangen und an die Netzwerkkomponente auszugeben. Das Adaptermodul fungiert also als Verbindungsmodul zwischen Transceivermodul und Netzwerkkomponente.

In einem weiteren Aspekt betrifft die Erfindung ein Transceivermodul für eine Netzwerkkomponente in einem Automatisierungssystem. Das Transceivermodul ist zur Ausbildung einer Steckverbindung mit einem Adaptermodul ausgebildet. Außerdem ist das Transceivermodul dazu ausgebildet, erste optische Signale von dem Adaptermodul zu empfangen und die ersten optischen Signale an das Automatisierungssystem auszugeben.

Ferner ist das Transceivermodul dazu ausgebildet, zweite optische Signale vom Automatisierungssystem zu empfangen und an das Adaptermodul auszugeben. Das Transceivermodul kann also in eine dafür vorgesehene Einbauvorrichtung eines Adaptermoduls eingebaut werden und dann Daten empfangen und ausgeben. Die Ausbildung der Steckverbindung zwischen dem Adaptermodul und dem Transceivermodul kann entweder fixierbar oder Hot Plug-fähig sein.

Außerdem betrifft die Erfindung ein System aus einem Transceivermodul, einem Adaptermodul und einer Netzwerkkomponente.

In noch einem weiteren Aspekt betrifft die Erfindung ein Verfahren zum Wechsel eines Transceivermoduls in einer Netzwerkkomponente. Dabei wird ein erstes Transceivermodul mit einer Steckverbindung mit einem Adaptermodul der Netzwerkkomponente verbunden. Die Steckverbindung wird dann, wenn ein Wechsel des Transceivermoduls gewünscht ist, gelöst, und das Transceivermodul entfernt. Ein zweites Transceivermodul kann dann einfach anstelle des ersten Transceivermoduls mit dem Adaptermodul durch Ausbildung einer Steckverbindung verbunden werden. Die Steckverbindung kann fixierbar oder Hot Plug-fähig sein.

Im Folgenden werden Ausführungsformen der Erfindung beispielhaft mit Bezugnahme auf die beiliegenden Figuren näher erläutert. Es zeigen:
- Figur 1: eine schematische Darstellung eines Adaptermoduls, das mittels einer Steckverbindung mit mehreren Transceivermodulen verbunden ist;
- Figur 2: eine schematische Darstellung eines Adaptermoduls und eines Transceivermoduls; und
- Figur 3: ein Blockdiagramm einer Netzwerkkomponente mit einem Adaptermodul und mehreren Transceivermodulen.
Elemente der nachfolgenden Figuren, die einander entsprechen, sind mit denselben Bezugszeichen gekennzeichnet.

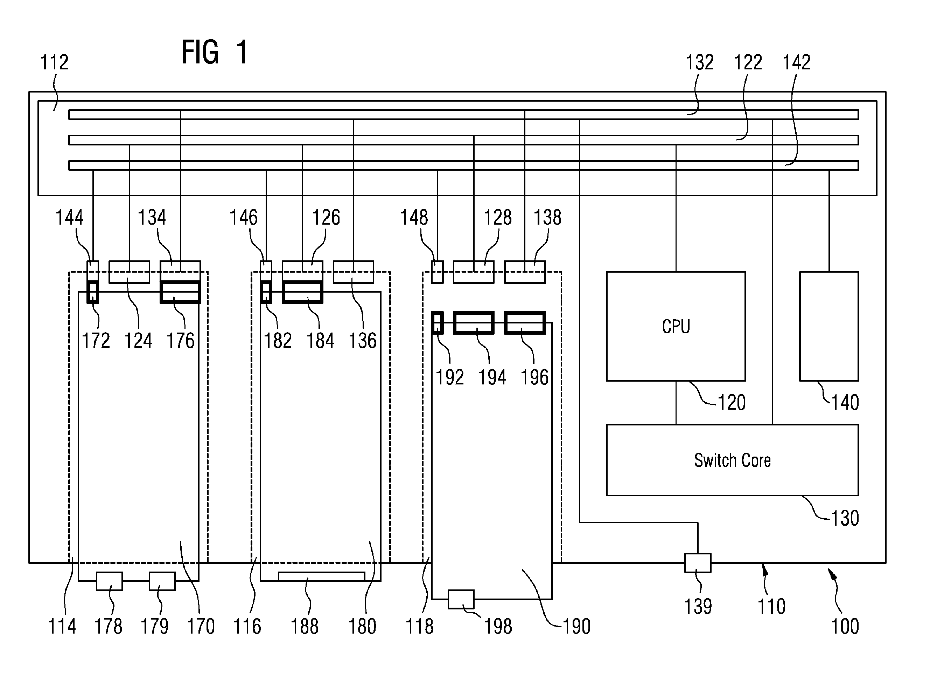

Figur 1 ist eine schematische Darstellung eines Adaptermoduls 100, das über eine Steckverbindung 102 mit vier Transceivermodulen 104 verbunden ist. Die Steckverbindung 102 kann entweder lösbar sein, was auch als Hot Plug-fähig bezeichnet werden kann, oder ausschließlich fixierbare Steckverbindung ausgebildet sein. Im Falle einer fixierbaren Steckverbindung kann beispielsweise die Steckverbindung 102 nur von einem Techniker mit einer Vorrichtung zur Lösung und Herstellung der Steckverbindung gelöst und hergestellt werden. Eine Hot Plug-fähige Steckverbindung 102 ermöglicht das Herstellen und Lösen der Steckverbindung 102 während des Betriebs der Netzwerkkomponente (in Figur 1 nicht dargestellt).

Das Adaptermodul 100 ist dazu ausgebildet, eine Kennung der Transceivermodule 104 über die Steckverbindungen 102 auszulesen. Die Kennung dient zur Datenübermittlung über die Transceivermodule 104. Die Kennung muss beispielsweise einer Netzwerkkomponente in dem Automatisierungssystem, in dem sich das Adaptermodul 100 und die Transceivermodule 104 befinden, bekannt sein, wenn diese Netzwerkkomponente Daten an die Transceivermodule 104 übermitteln soll. Außerdem muss die Kennung der Transceivermodule 104 der Netzwerkkomponente bekannt sein, mit der das Adaptermodul 100 über die Schnittstelle 106 direkt verbunden ist.

Wenn Daten aus dem Automatisierungssystem empfangen werden, werden diese zunächst von den Transceivermodulen 104 empfangen, über die Steckverbindungen 102 an das Adaptermodul 100 weitergegeben und schließlich über die Schnittstelle 106 an die nicht dargestellte Netzwerkkomponente ausgegeben.

Damit eine Datenübertragung zwischen zwei Netzwerkkomponenten ermöglicht werden kann, müssen jeweils zwei gleichartige Transceivermodule 104 in den bei der Datenübertragung beteiligten Netzwerkkomponenten verwendet werden. Gleichartig bedeutet hier insbesondere, dass die Reichweite der Transceivermodule gleich ist. Die Reichweite bedeutet hier die maximale Reichweite der optischen Signale, die von dem jeweiligen Transceivermodul 104 ausgesendet werden. Wenn beispielsweise in einer ersten Netzwerkkomponente ein Transceivermodul 104 mit einer maximalen Reichweite von 500 m verwendet wird, muss in einer zweiten Netzwerkkomponente, die Daten von der ersten Netzwerkkomponente empfangen soll oder Daten zu ihr übermitteln soll, ebenfalls ein Transceivermodul 104 mit einer maximalen Reichweite von 500 m verwendet werden.

Dadurch, dass die Steckverbindungen 102 lösbar sind, können die Transceivermodule 104 leicht und ohne großen Aufwand ausgetauscht werden. Falls also eine Anpassung der Transceivermodule aufgrund der Anforderungen an die Netzwerkkomponente erfolgen soll, kann ein Transceivermodul 104 ohne großen Aufwand durch ein anderes Transceivermodul 104, beispielsweise mit einer höheren oder niedrigeren Reichweite, ersetzt werden. So kann zum Beispiel auch aus einer günstigen Netzwerkkomponente eine höherwertigere Netzwerkkomponente gemacht werden, indem die günstigeren Transceiverkomponenten mit niedrigeren Reichweiten durch höherwertigere Transceiverkomponenten mit höheren Reichweiten ausgetauscht werden. Ebenfalls erleichtert wird die Abstimmung verschiedener Netzwerkkomponenten im Automatisierungssystem aufeinander. Wenn ein anderes Transceivermodul 104 benötigt wird, kann dieses einfach ausgetauscht werden, ohne dass das Adaptermodul oder die gesamte Netzwerkkomponente ausgetauscht werden muss.

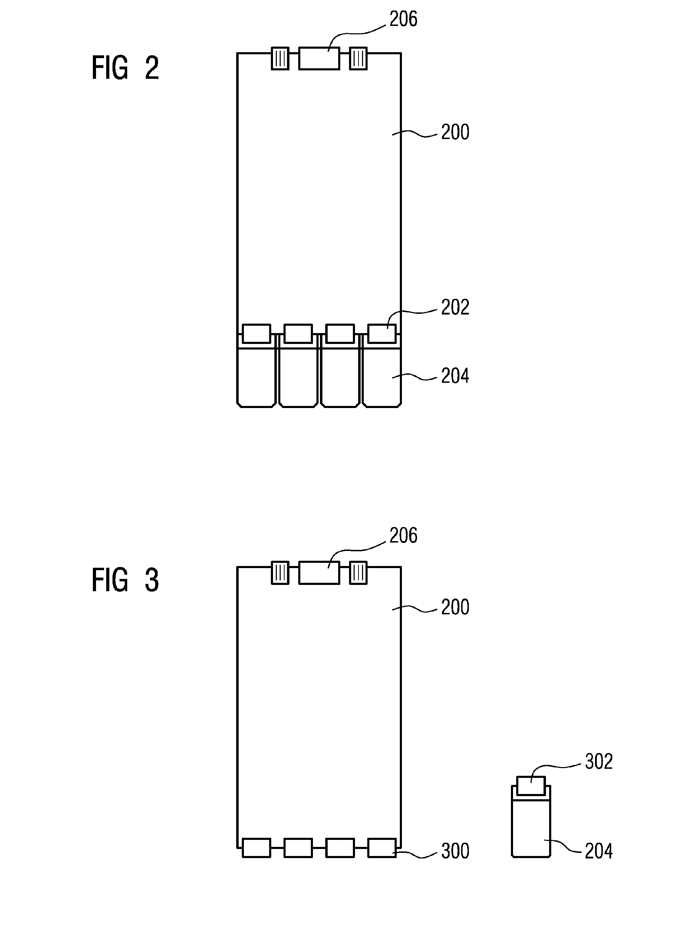

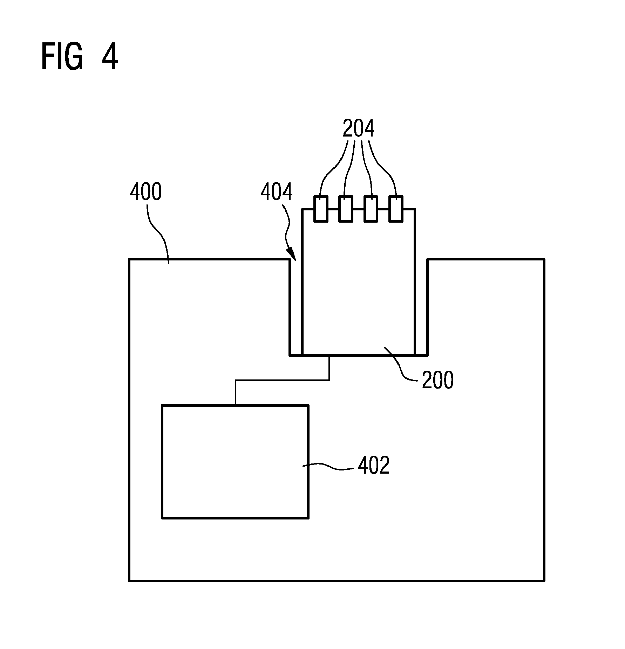

Figur 2 ist eine schematische Darstellung eines Adaptermoduls 100 mit einer Schnittstelle 106 zum Anschluss an eine Netzwerkkomponente und einem Steckverbinder 200 zur Ausbildung einer Steckverbindung mit einem Transceivermodul 104. Außerdem ist in Figur 2 ein Transceivermodul 104 schematisch dargestellt, das einen Steckverbinder 202 aufweist. Der Steckverbinder 202 ist zur Ausbildung einer Steckverbindung 102 mit dem Steckverbinder 200 des Adaptermoduls 100 ausgebildet. Der Steckverbinder 202 kann beispielsweise nur mit einer speziellen Vorrichtung mit dem Steckverbinder 200 verbunden werden, sodass eine Steckverbindung 102 hergestellt wird. Alternativ kann eine Steckverbindung 102 Hot Plug-fähig herstellbar sein. In diesem Fall kann der Steckverbinder 202 während des Betriebs der Netzwerkkomponente mit dem Steckverbinder 200 verbunden werden, sodass eine Steckverbindung 102 entsteht. Das Transceivermodul 104 kann mit jedem der vier Steckverbinder 200 über den Steckverbinder 202 verbunden werden. So wird eine flexible Ausgestaltung des Adaptermoduls 100 und der Netzwerkkomponente erreicht.

Figur 3 ist ein Blockdiagramm einer Netzwerkkomponente 300 mit einer Steuereinheit 302, einem Adaptermodul 100 in einer dafür vorgesehenen Einbauvorrichtung 304 und mehreren mit dem Adaptermodul 100 verbundenen Transceivermodulen 104.

Die Transceivermodule 104 sind über eine Steckverbindung mit dem Adaptermodul 100 verbunden. Die Netzwerkkomponente 300 ist über die Transceivermodule 104 mit einem Automatisierungssystem verbindbar. Mit anderen Worten sind also die Transceivermodule 104 die Anschlüsse der Netzwerkkomponente 300 an das Automatisierungssystem. Die Transceivermodule 104 haben eine Kennung, die von dem Adaptermodul 100 ausgelesen werden und von der Steuerung 302 zur Kommunikation im Automatisierungssystem verwendet werden kann. Die Transceivermodule 104 sind für Aussendung und Empfang von optischen Signalen über das Automatisierungssystem ausgebildet. Signale können also über die Transceivermodule von der Netzwerkkomponente 300 empfangen und von der Netzwerkkomponente 300 über die Transceivermodule 104 an weitere Netzwerkkomponenten des Automatisierungssystems ausgegeben werden. Bei der Verbindung zweier Netzwerkkomponenten im Automatisierungssystem muss darauf geachtet werden, dass die verwendeten Transceivermodule jeweils die gleiche maximale Reichweite für optische Signale aufweisen. Durch die einfache Austauschbarkeit der Transceivermodule 104 kann dies leicht und einfach realisiert werden.

Die Transceivermodule 104 sind durch eine Steckverbindung mit dem Adaptermodul 100 verbunden. Diese Steckverbindung kann entweder mit einer speziellen Vorrichtung hierfür fixiert und gelöst werden oder sogar während des Betriebs der Netzwerkkomponente 300 hergestellt oder gelöst werden.

### Liste der Bezugszeichen

- 100: Adaptermodul
- 102: Stecker
- 104: Transceivermodul
- 106: Schnittstelle
- 200: Steckverbinder
- 202: Steckverbinder
- 300: Netzwerkkomponente
- 302: Steuereinheit
- 304: Einbauvorrichtung

## Patentansprüche

1. Netzwerkkomponente (300) für ein Automatisierungssystem, wobei die Netzwerkkomponente zumindest ein Adaptermodul (100), mehrere Transceivermodule (104) und eine Steuereinheit (302) umfasst,
wobei die Transceivermodule über eine Steckverbindung (102) mit dem zumindest einen Adaptermodul verbunden sind,
wobei die Transceivermodule dazu ausgebildet sind, erste optische Signale von der Steuereinheit über das zumindest eine Adaptermodul zu empfangen und die ersten optischen Signale über das Automatisierungssystem an zumindest eine weitere Netzwerkkomponente des Automatisierungssystems auszugeben, und
wobei die Transceivermodule ferner dazu ausgebildet sind, zweite optische Signale von dem Automatisierungssystem zu empfangen und die zweiten optischen Signale über das zumindest eine Adaptermodul an die Steuereinheit auszugeben.

2. Netzwerkkomponente nach Anspruch 1,
wobei das zumindest eine Adaptermodul dazu ausgebildet ist, Kennungen der Transceivermodule auszulesen,
wobei jedem Transceivermodul genau eine Kennung zugeordnet ist, und
wobei die Kennungen dazu ausgebildet sind, für die Ausgabe der ersten optischen Signale an die weitere Netzwerkkomponente und für den Empfang der zweiten optischen Signale von dem Automatisierungssystem verwendet zu werden.

3. Netzwerkkomponente nach Anspruch 2, wobei das zumindest eine Adaptermodul dazu ausgebildet ist, die ausgelesene Kennung der Transceivermodule an die Steuereinheit und/oder an die zumindest eine weitere Netzwerkkomponente des Automatisierungssystems auszugeben.

4. Netzwerkkomponente nach einem der vorhergehenden Ansprüche, wobei die Transceivermodule und das zumindest eine Adaptermodul für eine fixierbare Steckverbindung ausgebildet sind.

5. Netzwerkkomponente nach einem der Ansprüche 1-3, wobei die Transceivermodule und das zumindest eine Adaptermodul für eine Steckverbindung ausgebildet sind, die während des Betriebs der Netzwerkkomponente gelöst und/oder geschlossen werden kann.

6. Adaptermodul (100) für eine Netzwerkkomponente (300) in einem Automatisierungssystem,
wobei das Adaptermodul zur Ausbildung einer Steckverbindung (102) mit zumindest einem Transceivermodul (104) der Netzwerkkomponente ausgebildet ist,
wobei das Adaptermodul dazu ausgebildet ist, erste optische Signale von der Netzwerkkomponente zu empfangen und die ersten optischen Signale an das zumindest eine Transceivermodul auszugeben, und
wobei das Adaptermodul dazu ausgebildet ist, zweite optische Signale von dem zumindest einen Transceivermodul zu empfangen und an die Netzwerkkomponente auszugeben.

7. Transceivermodul (104) für eine Netzwerkkomponente (300) in einem Automatisierungssystem,
wobei das Transceivermodul zur Ausbildung einer Steckverbindung (102) mit einem Adaptermodul (100) ausgebildet ist,
wobei das Transceivermodul dazu ausgebildet ist, erste optische Signale von dem Adaptermodul zu empfangen und die ersten optischen Signals an das Automatisierungssystem auszugeben, und
wobei das Transceivermodul dazu ausgebildet ist, zweite optische Signale vom Automatisierungssystem zu empfangen und an das Adaptermodul auszugeben.

8. System aus einer Netzwerkkomponente nach einem der Ansprüche 1-5, einem Adaptermodul nach Anspruch 6 und einem Transceivermodul nach Anspruch 7.

9. Verfahren zum Wechsel eines Transceivermoduls (104) in einer Netzwerkkomponente (300), wobei das Transceivermodul mit einer Steckverbindung (102) mit einem Adaptermodul (100) der Netzwerkkomponente verbunden ist, wobei das Verfahren die folgenden Schritte umfasst:
- Lösen der Steckverbindung zwischen dem ersten Transceivermodul und dem Adaptermodul der Netzwerkkomponente;
- Entfernen des ersten Transceivermoduls;
- Verbinden eines zweiten Transceivermoduls mit dem Adaptermodul der Netzwerkkomponente.
